(19) **Europäisches Patentamt**
**European Patent Office**
**Office européen des brevets**

(11) **EP 1 190 474 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **00990693.4**

(22) Anmeldetag: **08.12.2000**

(51) Int Cl.:
***H02H 1/00*** *(2006.01)*

(86) Internationale Anmeldenummer:
**PCT/EP2000/012453**

(87) Internationale Veröffentlichungsnummer:
**WO 2001/045224 (21.06.2001 Gazette 2001/25)**

(54) **STEUERGERÄTESCHUTZ FÜR EIN ZWEISPANNUNGSBORDNETZ**

CONTROLLER PROTECTIVE DEVICE FOR A DUAL-VOLTAGE ELECTRIC SYSTEM

PROTECTION D'APPAREIL DE COMMANDE POUR RESEAU DE BORD BITENSION

(84) Benannte Vertragsstaaten:
**AT BE CH CY DE DK ES FI FR GB GR IE IT LI LU MC NL PT SE TR**

(30) Priorität: **13.12.1999 DE 19961622**

(43) Veröffentlichungstag der Anmeldung:
**27.03.2002 Patentblatt 2002/13**

(73) Patentinhaber: **Volkswagen AG**
**38436 Wolfsburg (DE)**

(72) Erfinder:
• **BOTHE, Edgar**
**31224 Peine (DE)**
• **ZAWADE, Torsten**
**31228 Peine (DE)**

(74) Vertreter: **Patentanwälte Bressel und Partner**
**Radickestrasse 48**
**12489 Berlin (DE)**

(56) Entgegenhaltungen:
**DE-A- 19 501 985 DE-A- 19 755 050**

**Beschreibung**

Die Erfindung betrifft ein Zweispannungsbordnetz mit Verbraucherschutz, umfassend zwei galvanisch miteinander verbundene Bordnetze unterschiedlichen Spannungsniveaus.

Derartige Zweispannungsbordnetze sind beispielsweise aus der Kraftfahrzeugtechnik bekannt. Aufgrund der zunehmenden Anzahl von elektrischen Verbrauchern reicht oftmals eine einzige Spannungsversorgung nicht mehr aus. Des weiteren kommen elektrische Verbraucher zur Anwendung, die entweder eine höhere Betriebsspannung benötigen, so daß Zweispannungsbordnetze entwickelt wurden, die ein unterschiedliches Spannungsniveau von beispielsweise 14V und 42V aufweisen. Weiter ist es bekannt, diese Bordnetze über einen DC/DC- Wandler zu verbinden, damit diese beispielsweise über einen gemeinsamen Generator versorgbar sind. Ein Problem ist die Sicherung der elektrischen Verbraucher im Bordnetz der niedrigen Spannung, wenn die gemeinsame Masseleitung gestört ist, da es dann zu einer Verpolung der elektrischen Verbraucher im ersten Bordnetz kommen kann. Ein solches Zweispannungsbordnetz ist beispielsweise aus der DE 197 55 050 A1 bekannt.

Aus der DE 195 01 985 A1 ist ein Bordnetz mit Verbraucherschutz bekannt, umfassend eine erste Spannungsquelle und erste elektrische Verbraucher, die in verschiedenen Zweigen angeordnet sind, wobei parallel zu den elektrischen Verbrauchern in dem Bordnetz eine Schutzdiode in Sperrrichtung geschaltet ist und eine Sicherung zwischen der Schutzdiode und der ersten Spannungsquelle angeordnet ist, die auf die maximale Stromstärke der Schutzdiode abgestimmt ist.

Der Erfindung liegt daher das technische Problem zugrunde, ein Zweispannungsbordnetz mit Steuergeräteschutz zu schaffen, mittels dessen bei Massefehlern die elektrischen Verbraucher im Bordnetz mit der niedrigeren Spannung zuverlässig abgesichert werden.

Die Lösung des Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfasst das Zweispannungsbordnetz mit Verbraucherschutz ein erstes Bordnetz, umfassend eine erste Spannungsquelle $U_1$ und erste elektrische Verbraucher, die in verschiedenen Zweigen angeordnet sind, wobei parallel zu den elektrischen Verbrauchern in dem ersten Bordnetz eine Schutzdiode in Sperrrichtung geschaltet ist und eine Sicherung zwischen der Schutzdiode und der ersten Spannungsquelle angeordnet ist, die auf die maximale Stromstärke der Schutzdiode abgestimmt ist, sowie ein zweites Bordnetz, wobei das zweite Bordnetz eine zweite Spannungsquelle $U_2$ und zweite elektrische Verbraucher umfasst, wobei zwischen der zweiten Spannungsquelle $U_2$ und den zweiten elektrischen Verbrauchern eine Sicherung angeordnet ist, wobei die zweite Spannungsquelle $U_2$ eine höhere Spannung als die erste Spannungsquelle $U_1$ aufweist, wobei die beiden Bordnetze galvanisch über eine gemeinsame Masseleitung miteinander verbunden sind.

Vorzugsweise wird das Zweispannungsbordnetz als Kraftfahrzeugbordnetz verwendet.

Ein bevorzugtes Anwendungsgebiet des erfinderischen Zweispannungsbordnetzes ist ein Kraftfahrzeugbordnetz.

Die Erfindung wird nachfolgend anhand eines bevorzugten Ausführungsbeispieles näher erläutert. Die Fig. zeigen:

Fig. 1    ein Zweispannungsbordnetz mit Schutzdiode,
Fig. 2    ein Zweispannungsbordnetz ohne Schutzdiode (Stand der Technik) und
Fig. 3    ein Zweispannungsbordnetz ohne Schutz mit Massefehler (Stand der Technik).

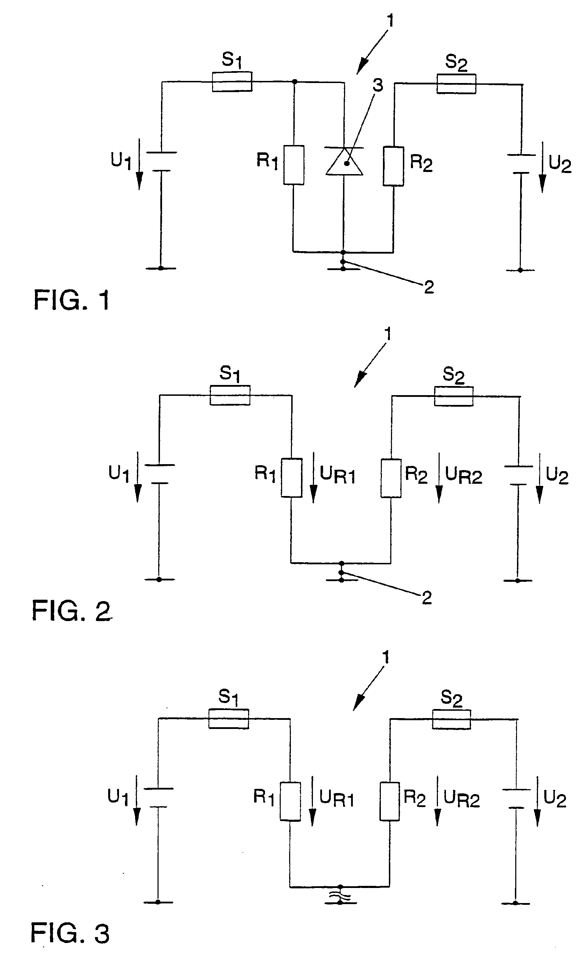

In der Fig. 2 ist ein Zweispannungsbordnetz 1 dargestellt. Das Zweispannungsbordnetz umfaßt ein erstes Bordnetz, das durch eine erste Spannungsquelle $U_1$ und erste elektrische Verbraucher $R_1$ gebildet wird, die in verschiedenen Zweigen angeordnet sind, wobei aus Übersichtsgründen nur ein Zweig dargestellt ist. Des weiteren umfaßt das Zweispannungsbordnetz ein zweites Bordnetz mit einer zweiten Spannungsquelle $U_2$ und zweiten elektrischen Verbrauchern $R_2$. Das erste und zweite Bordnetz weisen eine gemeinsame Masseleitung 2 auf. Des weiteren weisen die beiden Bordnetze jeweils eine Sicherung $S_1$, $S_2$ auf, mittels derer die Bordnetze gegen Kurzschlüße abgesichert sind. Des weiteren gilt $U_1 < U_2$.

In der Fig. 3 ist die Schaltung gemäß Fig. 2 mit einem Massefehler dargestellt. Gemäß der Kirchhoffschen Regel stellt sich dann am ersten Verbraucher R1 die Spannung

$$U_{R1} = U_1 \cdot U_2 + U_{R2}$$

oder

$$U_{R1} = (U_1 - U_2)\ \frac{R_1}{R_1 + R_2}$$

ein.

Mit der Voraussetzung $U_2 > U_1$ ist die resultierende Spannung $U_{R1} < 0$, also der elektrische Verbraucher $R_1$ gegenüber dem normalen Betriebszustand gemäß Fig. 2 verpolt. Entsprechend der Differenz der Spannungsquellen $U_1$ und $U_2$ sowie dem Verhältnis der elektrischen Verbraucher $R_1$ und $R_2$ stellt sich eine entsprechend hohe Spannung ein. Insbesondere bei Fällen, wo $R_1 \gg R_2$ ist, fällt somit nahezu die gesamte Spannung verpolt an $R_1$ ab und zerstört den elektrischen Verbraucher. Selbst bei $R_1 = R_2$ ist in der Praxis die Größe der Verpolungsspannung erheblich. Ein häufiger Wert für die Spannungsquellen $U_1, U_2$ ist beispielsweise $U_1 = 14V$ und $U_2 = 42V$. Somit ist die Verpolungsspannung genauso groß wie die normale Betriebsspannung von 14V. Mit zunehmender Größe von $R_1$ zu $R_2$ vergrößert sich die Verpolungsspannung bis zu 28V, also dem doppelten der normalen Betriebsspannung von $R_1$.

In der Fig. 1 ist das erfindungsgemäße Zweispannungsbordnetz 1 dargestellt, bei dem zusätzlich parallel zu den elektrischen Verbrauchern $R_1$ eine Schutzdiode 3 in Sperrrichtung gepolt angeordnet ist. Im normalen Betriebszustand, also bei intakter Masseleitung 2 fällt die Spannung $U_1$ als Sperrspannung über der Schutzdiode 3 ab, so daß bei Vernachlässigung des Sperrstroms der gesamte Strom des ersten Bordnetzes den elektrischen Verbrauchern $R_1$ zur Verfügung steht. Tritt nun ein Massefehler auf, so gilt wieder

$$U_{R1} = U_1 - U_2 + U_{R2}\ .$$

Allerdings teilt sich die Spannung nicht nach der Spannungsteilerregelung im Verhältnis der Widerstände $R_1$ und $R_2$ auf, da die Durchlaßspannung der Schutzdiode die Spannung an $R_1$ begrenzt, so daß eine Zerstörung von $R_1$ verhindert wird. Zur Verhinderung einer Zerstörung der Schutzdiode 3 durch einen unzulässig hohen Durchlaßstrom wird die Sicherung $S_1$ derart dimensioniert, daß diese vor Erreichen dieser Stromstärke auslöst, da ansonsten die Zerstörung der Schutzdiode unmittelbar die Zerstörung des Verbrauchers $R_1$ zur Folge hätte.

## Patentansprüche

1. Bordnetz mit Verbraucherschutz, umfassend eine erste Spannungsquelle $U_1$ und erste elektrische Verbraucher $R_1$, die in verschiedenen Zweigen angeordnet sind, wobei parallel zu den elektrischen Verbrauchern $R_1$ in dem Bordnetz eine Schutzdiode (3) in Sperrrichtung geschaltet ist und eine Sicherung $S_1$ zwischen der Schutzdiode (3) und der ersten Spannungsquelle $U_1$ angeordnet ist, die auf die maximale Stromstärke der Schutzdiode (3) abgestimmt ist, **dadurch gekennzeichnet, dass** ein zweites Bordnetz vorhanden ist, wobei das zweite Bordnetz eine zweite Spannungsquelle $U_2$ und zweite elektrische Verbraucher $R_2$ umfasst, wobei zwischen der zweiten Spannungsquelle $U_2$ und dem zweiten elektrischen Verbraucher $R_2$ eine Sicherung $S_2$ angeordnet ist, wobei die zweite Spannungsquelle $U_2$ eine höhere Spannung als die erste Spannungsquelle $U_1$ aufweist, wobei die beiden Bordnetze galvanisch über eine gemeinsame Masseleitung (2) miteinander verbunden sind.

2. Bordnetz nach Anspruch 1, **dadurch gekennzeichnet, daß** das Zweispannungsbordnetz (1) in einem Kraftfahrzeug angeordnet ist.

## Claims

1. On-board electrical system with load protection means, comprising a first voltage source $U_1$ and first electrical loads $R_1$ which are arranged in different branches, with a protective diode (3) being reverse-biased parallel to the electrical loads $R_1$ in the on-board electrical system, and a fuse $S_1$ being arranged between the protective diode (3) and the first voltage source $U_1$, the said fuse being matched to the maximum current intensity of the protective diode (3), **characterized in that** a second on-board electrical system is present, with the second on-board electrical system comprising a second voltage source $U_2$ and second electrical loads $R_2$, with a fuse $S_2$ being arranged between the second voltage source $U_2$ and the second electrical load $R_2$, with the second voltage source $U_2$ having a higher voltage than the first voltage

source $U_1$, with the two on-board electrical systems being electrically connected to one another via a common earth line (2).

2. On-board electrical system according to Claim 1, **characterized in that** the dual-voltage on-board electrical system (1) is arranged in a motor vehicle.

**Revendications**

1. Réseau de bord avec protection des charges, comprenant une première source de tension $U_1$ et des première charges électriques $R_1$, qui sont disposées dans des branches différentes, une diode de protection (3) étant montée dans le sens de blocage parallèlement aux charges électriques $R_1$ dans le réseau de bord, et un fusible $S_1$ étant disposé entre la diode de protection (3) et la première source de tension $U_1$ et étant réglée à l'intensité de courant maximale de la diode de protection (3),
   **caractérisé en ce que**
   l'on prévoit un deuxième réseau de bord, le deuxième réseau de bord comprenant une deuxième source de tension $U_2$ et des deuxièmes charges électriques $R_2$, un fusible $S_2$ étant disposé entre la deuxième source de tension $U_2$ et la deuxième charge électrique $R_2$, la deuxième source de tension $U_2$ présentant une tension supérieure à la première source de tension $U_1$, les deux réseaux de bord étant connectés l'un à l'autre par liaison galvanique par le biais d'une ligne de masse commune (2).

2. Réseau de bord selon la revendication 1, **caractérisé en ce que** le réseau de bord bitension (1) est disposé dans un véhicule automobile.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19755050 A1
- DE 19501985 A1